Europäisches Patentamt

European Patent Office

Office européen des brevets

(19)

(11) Veröffentlichungsnummer: **0 236 264**
**B1**

(12) **EUROPÄISCHE PATENTSCHRIFT**

(45) Veröffentlichungstag der Patentschrift: **08.08.90**

(21) Anmeldenummer: **87810060.1**

(22) Anmeldetag: **29.01.87**

(51) Int. Cl.⁵: **A 61 C 13/225**, A 61 C 1/08

(54) **Vorrichtung zur Befestigung von Zahnprothesen.**

(30) Priorität: **06.02.86 CH 464/86**

(43) Veröffentlichungstag der Anmeldung:
**09.09.87 Patentblatt 87/37**

(45) Bekanntmachung des Hinweises auf die Patenterteilung:
**08.08.90 Patentblatt 90/32**

(84) Benannte Vertragsstaaten:
**AT BE CH DE ES FR GB GR IT LI LU NL SE**

(56) Entgegenhaltungen:
**EP-A-0 162 808**
**EP-A-1 622 808**
**CH-A- 264 449**
**FR-A-2 494 579**
**GB-A-2 117 643**
**US-A-1 380 040**

(73) Patentinhaber: **Elgarden Aktiengesellschaft**
**9490 Vaduz (Liechtenstein) (LI)**

(72) Erfinder: **Jansen, Jozef**
**Buechlenweg 10**
**CH-8805 Richterswil (CH)**

(74) Vertreter: **Tschudi, Lorenz et al**
**Bovard AG Patentanwälte VSP Optingenstrasse 16**
**CH-3000 Bern 25 (CH)**

**Beschreibung**

Die vorliegende Erfindung bezieht sich auf eine Vorrichtung zur Befestigung von Zahnprothesen mit einem Verankerungselement und zwei zum Eingreifen in bestehende Zähne oder Stützen bestimmten Stiften.

Aus der EP—A—162 808 sind Vorrichtungen zum Befestigen von Zahnprothesen bekannt, die mit Stiften in einen bestehenden Zahn einzementiert werden, und zwar sind in dieser Druckschrift Vorrichtungen mit entweder zwei starren Stiften oder mit zwei beweglichen Stiften beschrieben. Es wird jeweils je eine Vorrichtung an einem eine Zahnlücke begrenzenden Zahn befestigt. Nun ist es für den Zahnarzt schwierig, in den bestehenden Zahn zwei Löcher derart zu bohren, dass sowohl die Längsachsen der Löcher als auch deren Abstand genau den Stiften der Vorrichtung zur Befestigung von Zahnprothesen entsprechen.

Es ist deshalb eine Aufgabe der vorliegenden Erfindung, eine eingangs erwähnte Vorrichtung zur Befestigung von Zahnprothesen zu schaffen, die es ermöglicht, leight in die gebohrten Löcher eingesetzt zu werden.

Dies wird erfindungsgemäss dadurch erzielt, dass ein Stift starr mit dem Verankerungselement verbunden ist, und der andere Stift in einer Ausnehmung des Verankerungselementes dreh- und/oder verschwenkbar gelagert ist.

Bisher wurden die Vorrichtungen zur Befestigung von Zahnprothesen mit einer Pinzette am Verankerungselement ergriffen, was eine sehr grosse Geschicklichkeit des Zahnarztes erforderlich machte. Dadurch wird die Vorrichtung zur Befestigung von Zahnprothesen derart ausgebildet, dass sie auf handliche Art und Weise ergriffen und in die mit Hilfe der Bohrlehre in den Zahn gebohrten Löcher eingesetzt werden kann. Um diesen Nachteil zu verhindern, wird gemäß Anspruch 3 das Verankerungselement vorzugsweise mit Mitteln zum lösbaren Befestigen eines Griffes versehen.

Weitere bevorzugte Ausführungsformen der Erfindung ergeben sich aus den abhängigen Ansprüchen 2 und 4.

Im folgenden werden anhand der beiliegenden Zeichnung Ausführungsbeispieles der Erfindung sowie deren Verwendung näher beschrieben. Es zeigen:

Fig. 1 einen Längsschnitt durch ein erstes Ausführungsbeispiel der Erfindung,

Fig. 2 eine perspektivische Ansicht des Ausführungsbeispiels gemäss Fig. 1,

Fig. 3 eine Seitenansicht des ersten Ausführungsbeispiels,

Fig. 4 eine Draufsicht auf das erste Ausführungsbeispiel gemäss Fig. 1,

Fig. 5 eine Seitenansicht eines zweiten Ausführungsbeispieles, teilweise im Schnitt und

Fig. 6 eine Vorderansicht des zweiten Ausführungsbeispiels gemäss Fig. 5.

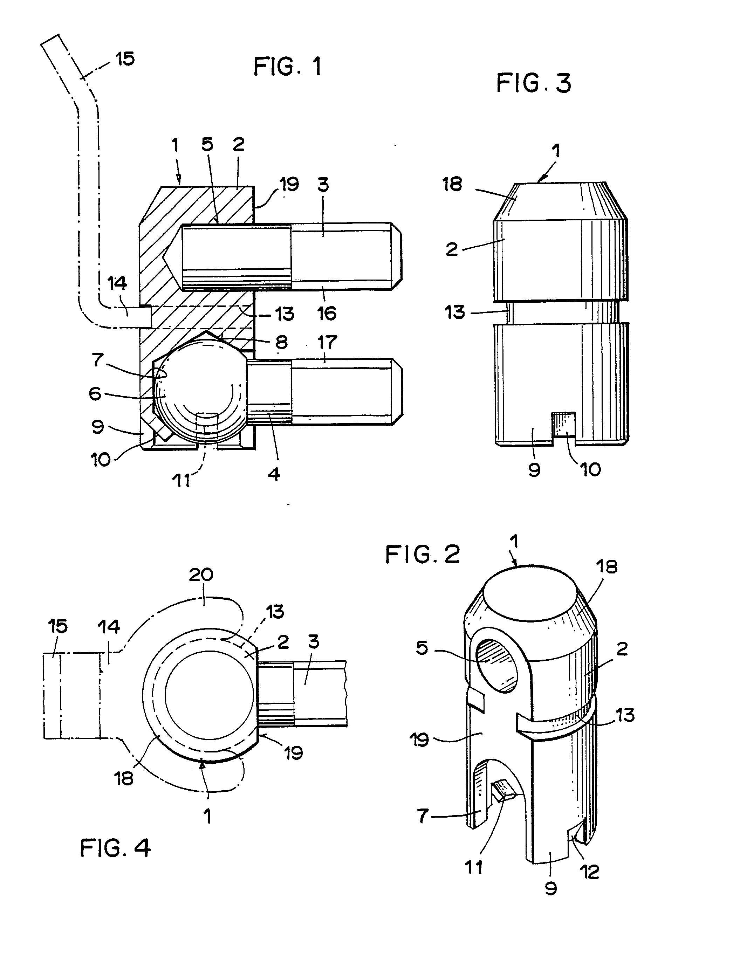

In Fig. 1 ist ein Längsschnitt durch ein erstes Ausführungsbeispiel einer Vorrichtung 1 zur Befestigung von Zahnprothesen dargestellt. Die Vorrichtung umfasst ein Verankerungselement 2 sowie zwei in bestehende Zähne einfügbare Stifte 3 und 4. Der obere Stift 3 ist starr in einer Ausnehmung 5 des Verankerungselementes 2 befestigt. Der untere Stift 4 ist mit einem Kugelkopf 6 versehen, der in einer unteren Ausnehmung 7 des Verankerungselementes 2 drehund verschwenkbar gelart ist. Die untere Ausnehmung 7 weist ein konisches oberes Ende 8 auf. Am untern Ende des Zylindermantels 9 des Verankerungselementes sind nach innen abgebogene, in den Zylindermantel eingeschnittene Halteelemente 10, 11 und 12 vorgesehen. Im mittleren Bereich des Verankerungselementes 2 ist eine Rille 13 vorgesehen, die zum Eingreifen des horizontalen Teils 14 eines Plastikhandgriffes 15 dient. Der Plastikhandgriff 15 erlaubt ein leichteres Einsetzen des Verankerungselementes 2 mit den Stiften 3 und 4 in die zur Aufnahme der Stifte gebohrten Löcher in einen als Stütze für das Verankerungselement 2 dienenden Zahn. Nach dem Einsetzen des Verankerungselementes 2 kann der Plastikhandgriff aus der Rille 13 entfernt werden. Der Handgriff 15 erlaubt ein einfacheres und sichereres Einsetzen des Verankerungselementes 2 als wenn dieses mit einer Pinzette gefasst und eingeführt würde. Zur Halterung von Prothesen wird je ein Verankerungselemente 2 mit den Stiften 3 und 4 in einen eine Zahnlücke begrenzenden, bestehenden Zahn eingesetzt. Die Prothese wird dann auf die Verankerungselemente 2 aufgesetzt. Die Stifte 3 und 4 umfassen noch einen Bereich 16 und 17, der mit Rillen versehen sein kann, wobei dann das Material zur Einzementierung der Stifte 3 und 4 in die Bohrungen im Zahn zwischen den Rillen Halt findet. Das Verankerungselemente 2 weist auf der dem als Stütze dienenden Zahn benachbarten Seite eine ebene Fläche 19 auf.

In Fig. 2 ist das Verankerungselement gemäss Fig. 1, welches sich insbesondere zur Verwendung im Bereich der Schneidezähne eignet, perspektivisch dargestellt. Der obere Teil 18 des Verankerungselementes verläuft kegelstumpfförmig. Der untere Stift 4 wird mit seinem kugelförmigen Ende 6 von den umgebogenen Halteelementen 10, 11 und 12 im unteren Teil des Zylinders 9 in der Ausnehmung 7 gehalten, wobei er von unten in die Oeffnung eingeführt wird, und die Halteelemente 10, 11 und 12 nach dem Einsetzen des kugelförmigen Endes 6 des Stiftes 4 in die Oeffnung 7 umgebogen werden.

Fig. 3 zeigt eine Ansicht des Verankerungselementes 2, in Richtung, vom Handgriff 15 aus gesehen.

Fig. 4 zeigt eine Draufsicht auf das Verankerungselement 2 mit dem Halter 15 gemäss der Fig. 1. Das untere und in der Rille 13 des Verankerungselementes 2 befestigte Ende 20 des Kunststoffhandgriffes 15 ist gabelförmig ausgebildet und umschiesst das Verankerungselement auf einem Grossteil seines Umfanges.

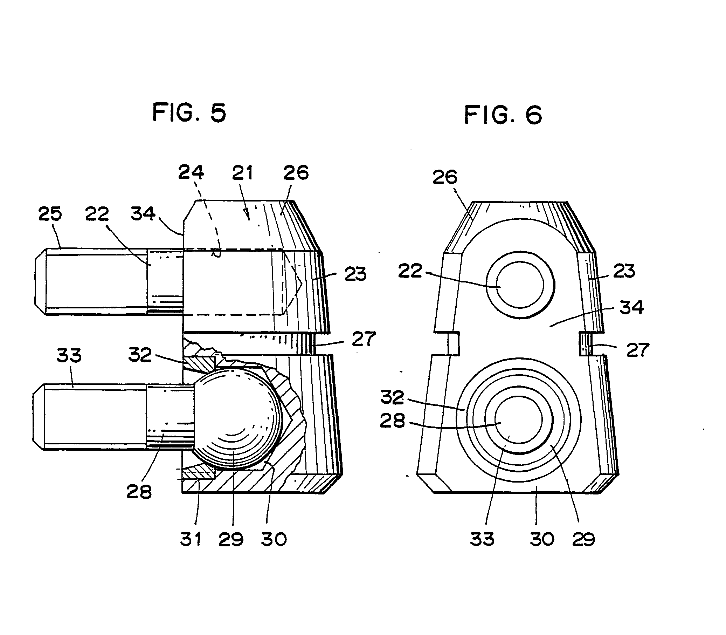

In Fig. 5 ist eine Seitenansicht, teilweise geschnitten, durch ein zweites Ausführungsbeispiel einer Vorrichtung 21 zur Befestigung von Zahnprothesen dargestellt, wobei sich dieses zweite Ausführungsbeispiel insbesondere für die Verwendung im Bereich der Molaren eignet. Ein oberer Stift 22 ist in einer im Verankerungselement 23 vorgesehenen Oeffnung 24 starr befestigt. Der Stift 22 weist an seinem vorderen Ende ebenfalls einen gerillten Bereich 25 auf. Das Verankerungselement 23 ist an seinem oberen Ende 26 kegelstumpfförmig ausgebildet. Im mittleren Bereich ist ebenfalls eine Rille 27 zur Aufnahme des gabelförmigen Endes des Kunststoffhandgriffes 15 vorgesehen. Der untere Stift 28 ist im Verankerungselement 23 mit einem mit dem Stift 28 verbundenen kugelförmigen Ende 29 dreh- und schwenkbar befestigt. Der untere Stift 28 wird in der für den Kugelkopf vorgesehenen Ausnehmung 30 im unteren Teil des Verankerungselementes 23 durch einen in eine kreisförmige Ausnehmung 31 des Verankerungselementes 23 eingesetzten Ring 32 gehalten. Der vordere Bereich 33 des unteren Stiftes 28 ist vorzugsweise ebenfalls mit Rillen versehen. An der dem als Stütze dienenden Zahn, in welchen die Stifte 22 und 28 eingelassen werden, zugewandten Seite ist das Verankerungselement 23 ebenfalls mit einer planen Fläche 345 versehen.

Fig. 6 zeigt eine Vorderansicht des zweiten Ausführungsbeispiels gemäss Fig. 5 von der dem als Stütze dienenden Zahn zugewandten Seite her. Die Aussenfläche des Verankerungselementes 23 ist im übrigen Bereich kegelmantelförmig ausgebildet.

## Patentansprüche

1. Vorrichtung zur Befestigung von Zahnprothesen mit einem Verankerungselement und zwei zum Eingreifen in bestehende Zähne oder Stützen bestimmten Stiften, dadurch gekennzeichnet, dass ein Stift (3) starr mit dem Verankerungselement (2) verbunden ist, und der andere Stift (4) in einer Ausnehmung (7) des Verankerungselementes (2) dreh- und/oder verschwenkbar gelagert ist.

2. Vorrichtung nach Patentanspruch 1, dadurch gekennzeichnet, dass der dreh- und/oder schwenkbare Stift (4) an seinem im Verankerungselement gelagerten Ende mit einem Kugelkopf (6) versehen ist.

3. Vorrichtung nach Patentanspruch 1 oder 2, dadurch gekennzeichnet, dass das Verankerungselement (2) mit Mitteln (13) zum lösbaren Befestigen eines Griffes versehen ist.

4. Vorrichtung nach Patentanspruch 3, dadurch gekennzeichnet, dass die Mittel als Nut (13) ausgebildet sind.

## Revendications

1. Dispositif pour la fixation de prothèses dentaires, comprenant un élément d'ancrage et deux pivots destinés à s'engager dans des dents ou apuis existants, caractérisé en ce qu'un pivot (3) est relié de façon rigide à l'élément d'ancrage (2), tandis que l'autre pivot (4) est monté de façon rotative et/ou rabattable dans un logement (7) de l'élément d'ancrage (2).

2. Dispositif selon la revendication 1, caractérisé en ce que le pivot rotatif et/ou rabattable (4) est muni d'une tête sphérique (6) à son extrémité montée dans l'élément d'ancrage.

3. Dispositif selon la revendication 1 ou 2, caractérisé en ce que l'élément d'ancrage (2) est muni de moyens (13) pour la fixation amovible d'une pièce de prise.

4. Dispositif selon la revendication 3, caractérisé en ce que les moyens (13) sont constitués par une rainure.

## Claims

1. Apparatus for connecting dental protheses with an anchoring element and two pins for engaging existing teeth or supports, characterized in that one pin (3) is rigidly connected to the anchoring element (2), and the other pin (4) is rotatably and/or pivotably mounted in a recess (7) of the anchoring element (2).

2. Apparatus according to claim 1, characterized in that the rotatable and/or pivotable pin (4) has a ball head (6) at its end mounted in the anchoring element.

3. Apparatus according to claim 1 or 2, characterized in that the anchoring element (2) has means (13) of detachable attachment of a handle.

4. Apparatus according to claim 3, characterized in that the means is a groove (13).

FIG. 1

FIG. 3

FIG. 2

FIG. 4

FIG. 5

FIG. 6